# EUROPÄISCHE PATENTSCHRIFT

(11) **EP 0 788 917 B1**
(45) Veröffentlichungstag und Bekanntmachung des Hinweises auf die Patenterteilung: **04.10.2000**
(21) Anmeldenummer: 96112656.2
(22) Anmeldetag: 06.08.1996
(51) Int. Cl.: B60K 15/04, F16L 37/084, B67D 5/37

(54) **Betankungsanordnung zum roboterfähigen Betanken von Fahrzeugen**
Refuelling arrangement allowing refuelling by robot
Agencement de remplissage permettant le remplissage avec carburant par robot

(30) Priorität: 05.09.1995 DE 19532774
(43) Veröffentlichungstag der Anmeldung: 13.08.1997
(73) Patentinhaber: DaimlerChrysler AG, 70567 Stuttgart (DE)
(72) Erfinder: Kremer, Adolf, 71686 Remseck (DE); Steinkämper, Reinhard, 71364 Winnenden (DE); Fischer, Axel, 63785 Obernburg (DE); Schumann, Tilo, 64807 Dieburg (DE)

(56) Entgegenhaltungen:
- EP-A- 0 612 639
- DE-C- 4 217 966

## Beschreibung

Die Erfindung betrifft eine Betankungsanordnung zum roboterfähigen Betanken von Fahrzeugen mit Kraftstoff gemäß dem Oberbegriff des Patentanspruches 1.

Eine gattungsgemäße Betankungsanordnung ist aus der EP 0 612 639 A1 bekannt. Diese beinhaltet dort eine robotergeführte Zapfpistole und einen an einem Verschluß für den Tankeinfüllstutzen eines Kraftfahrzeuges angeordneten Andockaufsatz, der hohlzylindrisch ausgebildet ist und eine Innenverzahnung besitzt, in die eine am austrittsseitigen Ende des Füllrohres der Zapfpistole umfänglich ausgebildete Außenverzahnung beim Andocken formschlüssig eingreifen kann, so daß durch Verdrehen des Andockaufsatzes über die Zapfpistole ein Öffnen des Verschlußes herbeigeführt und eine abrutschsichere Halterung der Zapfpistole am Kraftfahrzeug im Andockzustand gewährleistet werden kann. Beim Verlassen des Fahrzeuges durch einen Fahrzeuginsassen können während des Betankungsvorganges Schaukelbewegungen bei dem besagten Fahrzeug auftreten, die zu einer Trennung der beiden Verzahnungen und demgemäß zu einer Störung des Betankungsvorganges führen können.

Der Erfindung liegt die Aufgabe zugrunde, eine gattungsgemäße Betankungsanordnung dahingehend weiterzubilden, daß Störungen des Betankungsvorganges durch fahrzeugseitig induzierte Bewegungen des Andockaufsatzes vermieden werden können.

Die Aufgabe ist erfindungsgemäß durch die im Patentanspruch 1 angegebenen kennzeichnenden Merkmale gelöst.

Dank der Erfindung wird durch das Untergreifen des am Andockaufsatz angeordneten Bundes durch den Verriegelungskörper in Axialrichtung eine sichere Verriegelung der Zapfpistole am Einfüllstutzen bewirkt. Mit dieser wird in einfacher Weise ohne von außen eingreifende Hilfsmittel eine unerwünschte axiale Entkopplung von Zapfpistole und Einfüllstutzen bei Schaukelbewegungen des Fahrzeuges verhindert und somit eine funktionssichere Ankopplung erzielt.

Weiterhin bietet sich mit der Erfindung eine bauraumsparende und konstruktiv einfache Lösung für eine Betankungsanordnung an, da Betätigungskomponenten zur Verriegelung, die im Durchlaß der Zapfpistole geführt sind und damit dessen Querschnitt einengen, entfallen und auch sonst keine bauliche Einschränkungen für den ohnehin baulich knapp bemessenen Tankmuldenbereich auftreten.

Desweiteren wirkt sich für einen unbehinderten Andockvorgang vorteilhaft aus, daß der Verriegelungskörper innerhalb der Zapfpistole vollkommen eingetaucht ist und damit keinen Widerstand für die axiale Bewegung der Zapfpistole am Andockaufsatz bietet. Aufgrund der Anschrägung an der Oberseite des Verriegelungskörpers und der an dessen Anschrägung anliegenden Anschrägung des andockaufsatzseitigen Formschlußelementes kann der Verriegelungskörper im Falle einer Notabdockung, also.bei Überschreiten einer bestimmten axialen Verriegelungskraft entgegen der entsprechend dimensionierten Federkraft der Vorspannfeder entlang der Anschrägung in radialer Richtung zurückweichen, so daß die Zapfpistole ohne vorher gedreht zu werden schnell aus dem Andockaufsatz herausgleiten kann.

Zweckmäßige Ausgestaltungen der Erfindung können den Unteransprüchen entnommen werden; im übrigen ist die Erfindung anhand zweier in den Zeichnungen dargestellter Ausführungsbeispiele nachfolgend näher erläutert; dabei zeigt:
Fig. 1 die erfindungsgemäße Betankungsanordnung abschnittsweise in einem seitlichen Längsschnitt mit einem am unteren Ende der Zapfpistole vorgesehenen Verriegelungskörper, in den eine Führungsbahn eingearbeitet ist, und mit einem Führungsstift, der an einer die Formschlußelemente der Zapfpistole bildende Verzahnung starr befestigt ist, in unverriegelter Andocklage der Zapfpistole,
Fig. 2 eine Draufsicht auf einen Querschnitt der Anordnung aus Fig. 1 in einem Schnitt entlang der Linie II-II in verriegelter Andocklage der Zapfpistole,
Fig. 3 eine Draufsicht auf einen Querschnitt der Anordnung aus Fig. 1 in einem Schnitt entlang der Linie III-III in unverriegelter Andocklage der Zapfpistole,
Fig. 4 die erfindungsgemäße Betankungsanordnung abschnittsweise in einem seitlichen Längsschnitt mit einem am unteren Ende der Zapfpistole vorgesehenen Verriegelungskörper, mit einem Führungsstift, der in diesem starr befestigt ist, und mit einer die Formschlußelemente der Zapfpistole bildenden Verzahnung, in die eine Führungsbahn für den Stift eingearbeitet ist, in Ent- und Verriegelungsstellung der angedockten Zapfpistole,
Fig. 5 eine Draufsicht auf einen Querschnitt der Zapfpistole aus Fig. 4 in einem Schnitt entlang der Linie V-V in verriegelter Stellung,
Fig. 6 eine Draufsicht auf einen Querschnitt der Zapfpistole aus Fig. 4 in einem Schnitt entlang der Linie VI-VI in entriegelter Stellung,
Fig. 7 eine Draufsicht auf einen die Verzahnung tragenden Ring der Zapfpistole aus Fig. 4.

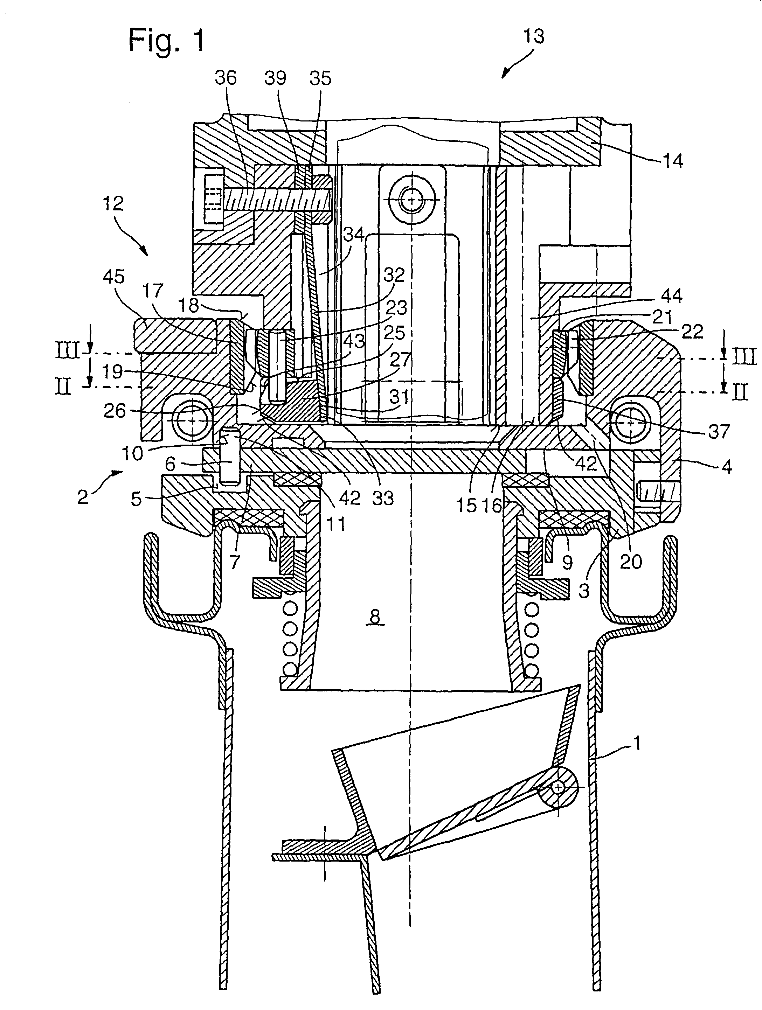

In Fig. 1 ist ein Einfüllstutzen 1 eines Kraftstofftankes eines Kraftfahrzeuges dargestellt, der mit einem bajonettartig auf ihm aufgeschraubten Verschlußdeckel 2 verschlossen ist. Der Verschlußdeckel 2 besteht im wesentlichen aus zwei Ringkörpern 3,4, wobei der Verschlußdeckel 2 mit dem Ringkörper 3 am Einfüllstutzen 1 verschraubt ist. Im Ringkörper 3 ist oberseitig eine vertikal angeordnete Drehachse (in der Zeichnung nicht sichtbar) für einen horizontal verschwenkbaren und mit der Achse fest verbundenen Schwenkschiebers 7 vorgesehen, der einen zentralen Einlaßkanal 8 des Ringkörpers 3 dichtend verschließt. Der Ringkörper 4 ist auf dem Ringkörper 3 oberseitig um die körpereigene Achse verdrehbar gelagert und weist an seiner Unterseite 9 randnah eine Aufnahme 10 auf, in die ein Mitnahmestift 6 für den Schwenkschieber 7 mit seinem oberen Ende 11 im Pressitz eingreift. Der Mitnahmestift 6 bewegt über eine Verdrehung des Ringkörpers 4 den Schwenkschieber 7 in Umfangsrichtung von einer Öffnungs- in eine Schließstellung und umgekehrt je nach Drehrichtung des Ringkörpers 4, wobei der Mitnahmestift 6 innerhalb einer radialen im Schwenkschieber 7 eingearbeiteten Führungsbahn geführt ist, wobei der Stift 6 im Ringkörper 3 oberseitig in einem kreisbogenförmigen Freilauf 5 entlangläuft.

Der Ringkörper 4 weist oberseitig einen koaxialen hohlzylindrischen Andockaufsatz 12 auf, in den eine Zapfpistole 13 eines Tankroboters mit einem austrittseitigen Ende 14, im folgenden "Endeffektor" genannt, zur Betankung eintaucht und mit seiner Stirnseite 15 an der Oberseite 16 des Ringkörpers 4 in Andocklage anliegt. Im Innenumfang des Andockaufsatzes 12 ist eine umlaufende Verzahnung 17 mit axialem Abstand zur Oberseite 16 des Ringkörpers 4 ausgebildet, deren Flanken 18,19 in axialer Richtung angeschrägt sind. Der Ringkörper 4 wird von einem schräg nach außen verlaufenden Drainagekanal 20 durchsetzt, durch den zur Vermeidung von Korrosion Regen- und Kondenswasser aus dem Andockbereich herausgeführt werden soll.

Auf den Endeffektor 14 ist ein Verzahnungsring 21 gesteckt, der an diesem verdrehbar gehalten ist. Die Verzahnung des Verzahnungsringes 21 ist von drei Segmenten 22 gebildet, die in Umfangsrichtung symmetrisch zueinander angeordnet und komplementär zur Verzahnung 17 mit Zähnen bestückt sind. Die Segmente 22 sind unterseitig angeschrägt, so daß bei der Andockbewegung der Zapfpistole 13 am Andockaufsatz 12 durch die aufeinander gleitenden angeschrägten Flächen der Flanken 18 der Verzahnung 17 des Andockaufsatzes 12 und der Segmentverzahnung eine Zentrierung der Zapfpistole 13 im Andockaufsatz 12 erfolgen kann.

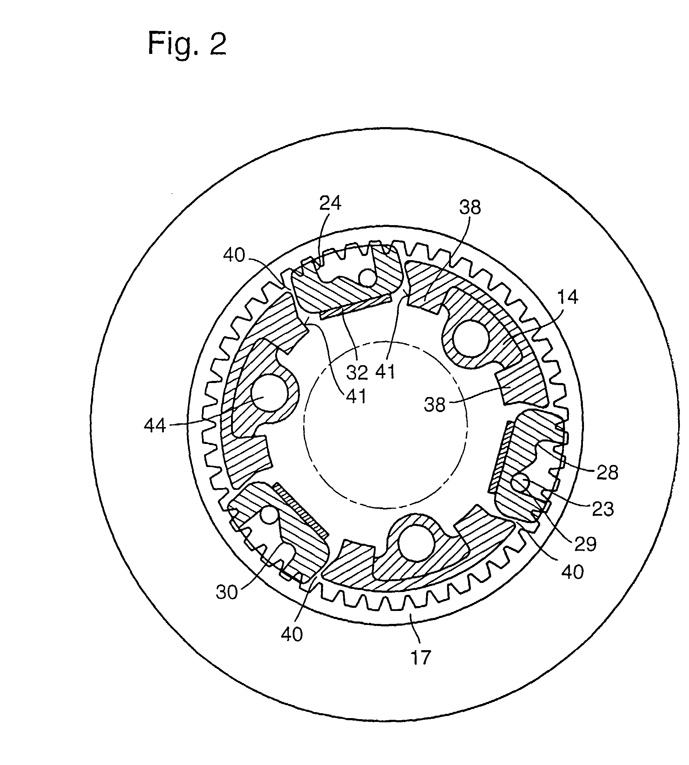

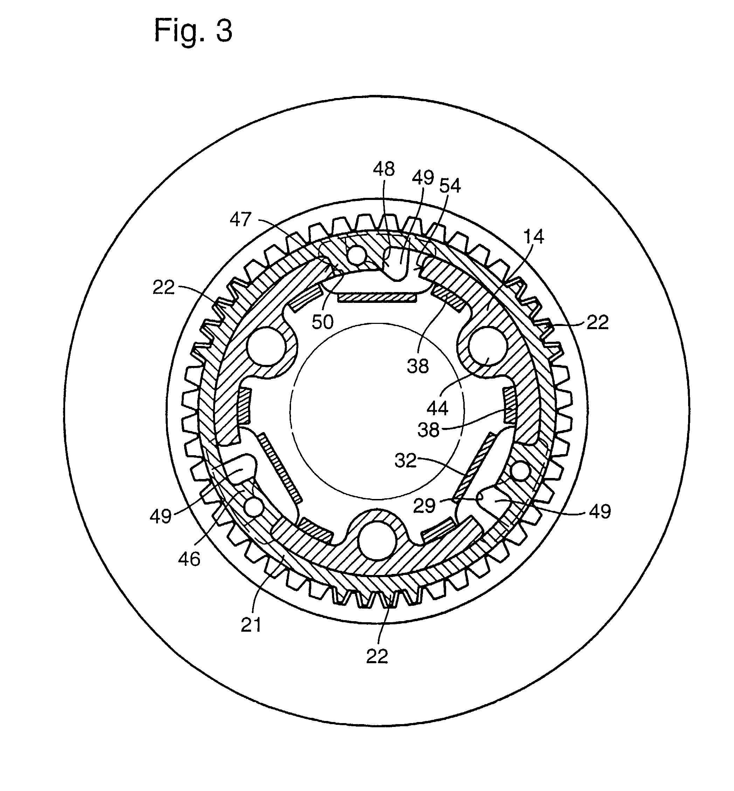

In dem Verzahnungsring 21 ist ein von diesem vertikal abragender Führungsstift 23 im Pressitz gehalten. Der Führungsstift 23 ragt in eine Führungsbahn 24, die in die Oberseite 25 am Außenrand 26 eines hammerkopfförmigen Verriegelungskörpers 27 eingearbeitet ist. In der in Umfangsrichtung des Endeffektors 14 verlaufenden Führungsbahn 24 sind zwei Raststellungen 28,29 vorgesehen, von der die eine Raststellung 28 radial weiter innen gelegen ist als die Raststellung 29. Von der Raststellung 28 erstreckt sich die Führungsbahn 24 entlang einer Schräge radial nach außen und endet in der Raststellung 29, die im Verhältnis zum Endpunkt 30 der Schräge radial weiter innen liegt (Fig. 2 und 3). In der Raststellung 29, wie aus Fig. 1 ersichtlich ist, taucht der Verriegelungskörper 27 vollständig in den Endeffektor 14 ein.

An der dem Außenrand 26 gegenüberliegenden Innenseite 31 des Verriegelungskörpers 27 ist eine Blattfeder 32 durch Kleben, Löten oder Nieten mit einem unteren Ende 33 befestigt, die sich in dieser Stellung in radial nach außen vorgespanntem Zustand befindet. Die Blattfeder 32 ist in einer axialen Aussparung 34 des Endeffektors 14 angeordnet und mit seinem verriegelungskörperabgewandten Ende 35 an diesem mittels einer Schraube 36 befestigt. Jeder der drei in Umfangsrichtung symmetrisch angeordneten Blattfedern 32 ist dabei jeweils eine Schraube 36 zugeordnet.

Mit dieser Schraube 36 ist ebenfalls eine Haltehülse 37 befestigt, die auf den Endeffektor 14 nachträglich zum Verzahnungsring 21 gesteckt ist und an diesem zu dessen axialer Halterung anliegt. Die Hülse 37 weist für ihre Befestigung mehrere Lappen 38 auf, die axial in die Aussparung 34 des Endeffektors 14 hineinragen und an ihrem oberen Ende 39 über jeweils eine Schraube 36 am Endeffektor 14 angeschraubt sind. Die Hülse 37 weist desweiteren im Bereich der Stirnseite 15 des Endeffektors 14 radiale Öffnungen 40 auf, in denen der jeweilige Verriegelungskörper 27 aufgenommen ist und in der Raststellung 29 bündig mit dem äußeren Öffnungsrand 41 abschließt. Die Haltehülse 37 und der Verriegelungskörper 27 weisen an der Stirnseite 15 des Endeffektor 14 Fasen 42 auf, mit denen beim Einführen des Endeffektors 14 in den Andockaufsatz 12 eine erste Zentrierung der Zapfpistole 13 erfolgt.

Der Verriegelungskörper 27 weist am Außenrand 26 eine Anschrägung 43 auf, die bezüglich der Steigung der Flanken 19 der Verzahnung 17 des Andockaufsatzes 12 entsprechend ausgebildet sind. Der Endeffektor 14 weist im übrigen in Umfangsrichtung symmetrisch verteilt drei Axialbohrungen 44 für die Aufnahme einer Sensoroptik auf.

Für eine manuelles Öffnen und Schließen des Verschlußdeckels 2 ist am Andockaufsatz 12 in dessen Umfang in Stirnseitennähe integriert ein Bügel 45 angeordnet, der um eine quer zur Andockrichtung verlaufende Achse schwenkbar ist, so daß bei einer 90°-Verschwenkung des Bügels 45 eine Handhabungsstellung - gegebenenfalls in einer Raststellung - erreicht ist, in der der Verschlußdeckel 2 in einfacher Weise durch Drehen des Bügels 45 in Umfangsrichtung geöffnet werden kann. Der Bügel 45 ist federbeaufschlagt, wobei die Feder den Bügel 45 in Richtung seiner Nichtgebrauchslage am Umfang des Andockaufsatzes 12 zieht.

Wie aus Fig. 2 darüber hinausgehend ersichtlich ist, umgreift die Hülse 37 mit ihren von ihrem Umfang radial einwärts stehenden Lappen 38 im Stirnseitenbereich des Endeffektors 14 diesen zangenartig, so daß ein fester Halt der Hülse 37 in diesem Bereich des Endeffektors 14 gegeben ist. Hierbei sind die Verriegelungskörper 27 aus ihrer Eintauchlage ausgerückt und untergreifen die Verzahnung 17 des Andockaufsatzes 12, wobei die Zapfpistole 13 an diesem axial verriegelt ist. Dabei ist der Führungsstift 23 in der Raststellung 28 eingerastet, so daß die Blattfeder 32 den Verriegelungskörper 27 durch die Öffnung 40 der Hülse 37 hindurch radial nach außen drücken kann.

Fig. 3 zeigt, daß der Verzahnungsring 21 einen radial nach innen verlaufenden Vorsprung 46 besitzt, der in Umfangsrichtung mittig zwischen den Zahnsegmenten 22 gelegen ist. Die seitlichen Flanken 47,48 des Vorsprunges 46 bilden dabei Anschläge für den glockenförmigen Endeffektor 14, der dazu Öffnungen 49 aufweist, in die der Vorsprung 46 hineinragt. Die Öffnungen 49 besitzen eine Breite, die mindestens der Länge des Bahnverlaufes der Führungsbahn 24 in Umfangsrichtung entspricht. Die Flanken 47 liegen in der Rastposition 28 am Öffnungsrand 50 der Öffnung 49 an, während die Flanken 48 in der Rastposition 29 am Öffnungsrand 54 anliegt. Zwar bilden die Raststellungen 28,29 an sich schon Anschläge für den Verzahnungsring 21 aus, jedoch besteht dabei die Gefahr, daß sich aufgrund zu großer Drehkraft in Umfangsrichtung eine Verwindung der Blattfedern 32 ergibt, was gegebenenfalls zu Beschädigungen des Verriegelungsmechanismus und somit zu einer Funktionsunsicherheit der Zapfpistole 13 beim Betanken führen kann. Dies ist durch die oben beschriebenen zusätzlichen Anschläge unterbunden.

Beim Andockvorgang greift die Zapfpistole 13 mit den Zahnsegmenten 22 des Verzahnungsringes 21 des Endeffektors 14 in die Verzahnung 17 des Andockaufsatzes 12. Bei einer relativen Fehllage des Endeffektors 14 zum Andockaufsatz 12 in Umfangsrichtung treffen die Zahnköpfe der Verzahnungen 17,22 aufeinander. Der Endeffektor 14, der in Axialrichtung federelastisch ausgestaltet ist, wird um ein festgelegtes Verstellmaß entgegen der Federkraft der Feder weitergeschoben, bis eine Abschaltstellung erreicht ist, wonach die Axialbewegung der robotergeführten Zapfpistole 13 vorerst gestoppt wird. In dieser Abschaltstellung wird die Zapfpistole 13 so weit in Umfangsrichtung gedreht, bis die Verzahnungen 17,22 ineinandergreifen, worauf der Endeffektor 14 durch die Vorspannung der Feder in die Verzahnung einschnappt. Der Endeffektor ist aufgrund der ineinandergreifenden Verzahnungen 17,22 nun in Umfangsrichtung verriegelt.

Der Endeffektor 14 wird nun um etwa 15° gedreht, wobei der Verzahnungsring 21 durch die formschlüssige Verbindung mit der Verzahnung 17 des Andockaufsatzes 12 sich relativ zum Endeffektor 14 in Umfangsrichtung verdreht. Hierbei läuft der Führungsstift 23 in der Führungsbahn 24 des noch in den Endeffektor 14 gänzlich eingetauchten Verriegelungskörpers 27 von der Raststellung 29 in die Raststellung 28. Währenddessen wird der Verriegelungskörper 27 durch die Blattfeder 32 immer weiter nach außen gedrückt, bis in der Raststellung 28 der Verriegelungskörper 27 die den umlaufenden Bund des Andockaufsatzes 12 bildende Verzahnung 17 untergreift, wodurch für die Zapfpistole 13 eine axiale Verriegelung gegeben ist. Die Zapfpistole 13 wird nun um weitere 25° in gleichem Richtungssinne gedreht, bis der Schwenkschieber 7 den Einlaßkanal 8 völlig öffnet. Danach kann das Füllrohr der Zapfpistole 13 eingeschoben werden und die Betankung beginnen.

Nach Betankung wird die Zapfpistole 13 zurückgedreht bis der Endeffektor 14 axial entriegelt ist. Der Verriegelungskörper 27 wird dabei wieder über die in Umfangsrichtung feststehende Verzahnung des Verzahnungsringes 21 und den Führungsstift 23 radial einwärts entgegen der Federkraft der Blattfeder 32 in seine Eintauchlage gedrückt. Der Führungsstift 23, der den Verriegelungskörper 27 stets hindert - beaufschlagt durch die Blattfeder 32 - radial nach außen zu federn, liegt nun wieder in seiner Raststellung 29.

Bei einem Notabdocken liegt die oberseitige Anschrägung 43 des Verriegelungskörpers 27 an der Flanke 19 der Verzahnung 17 des Andockaufsatzes 12 an. Bei Übersteigen einer bestimmten Axialhaltekraft wird die Blattfeder 32 mitsamt dem Verriegelungskörper 27, der entlang der Flanke 19 gleitet, radial nach innen gedrückt, so daß die Axialverriegelung spontan aufgehoben ist und die Zapfpistole 13 aus der Verzahnung und damit aus dem Andockaufsatz 12 schnell herausgezogen werden kann ohne daß Verklemmungen und Beschädigungen der Betankungsanordnung auftreten.

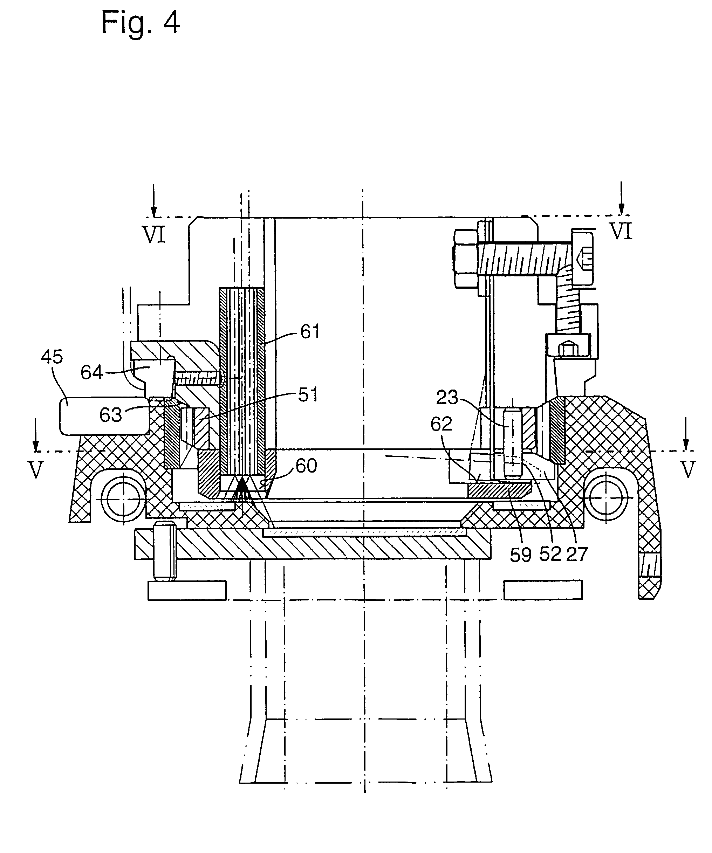

Eine weitere Variante der Betankungsanordnung ist im Ausführungsbeispiel der Fig. 4 bis 7 dargestellt. Abweichend vom ersten Ausführungsbeispiel ist die Führungsbahn 24 nicht im Verriegelungskörper 27, sondern in einem dem Verzahnungsring 21 entsprechenden Verzahnungsring 51 ausgebildet. Der Führungsstift 23 ist dazu im Preßsitz in einer Vertikalbohrung 52 im Verriegelungskörper 27 oberseitig angeordnet. In dessen ausgerückten Zustand hintergreift er die Verzahnung 17 über seine gesamte Fläche, da kein Material für die Führungsbahn herausgenommen werden muß, so daß sich dort eine verbesserte Anlage ergibt.

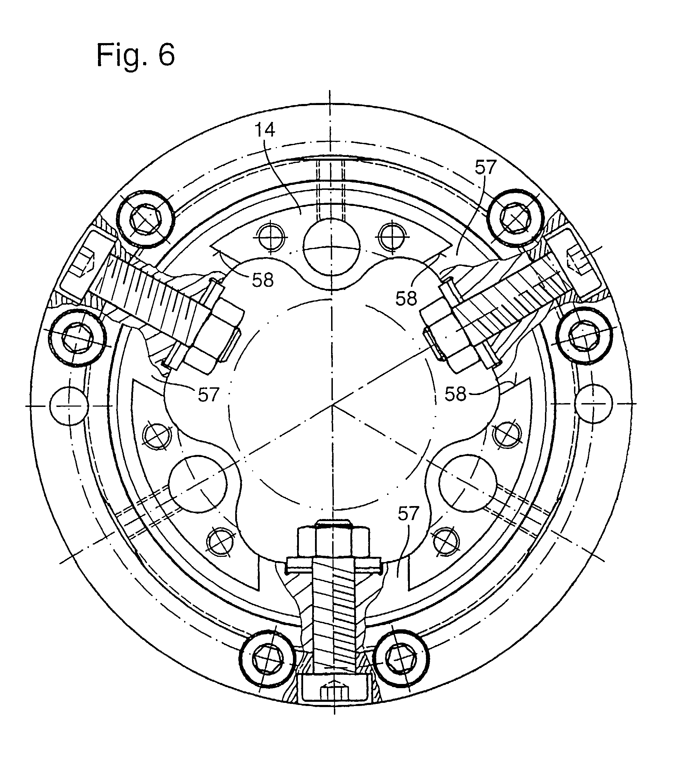

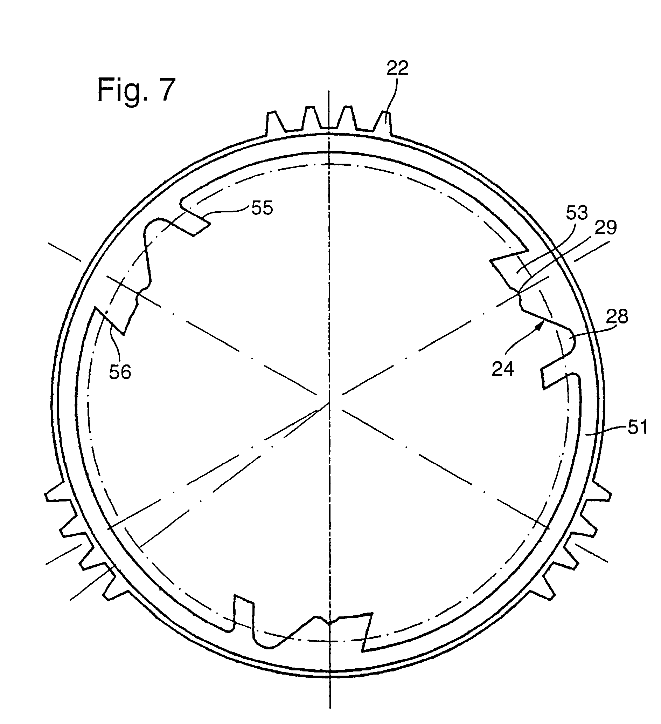

Der Verzahnungsring 51 weist radial nach innen abstehende Vorsprünge 53 auf, in die jeweils eine Führungsbahn 24 radial von innen aus eingearbeitet ist (Fig. 7). Die Vorsprünge 53 besitzen Flanken 55,56 entsprechend der Flanken 47,48, die von der Führungsbahn 24 weg weisend schräg verlaufen und die Anschläge für den raltiv zum Verzahnungsring 51 drehbaren Endeffektor 14 bilden. Der Endeffektor 14 weist entsprechend den Öffnungen 49 hier Öffnungen 57 auf, durch die die Vorsprünge 53 hindurchragen und deren Öffnungsränder 58 die formnegativ ausgebildeten Gegenanschläge für die Flanken 55,56 bilden (Fig. 6).

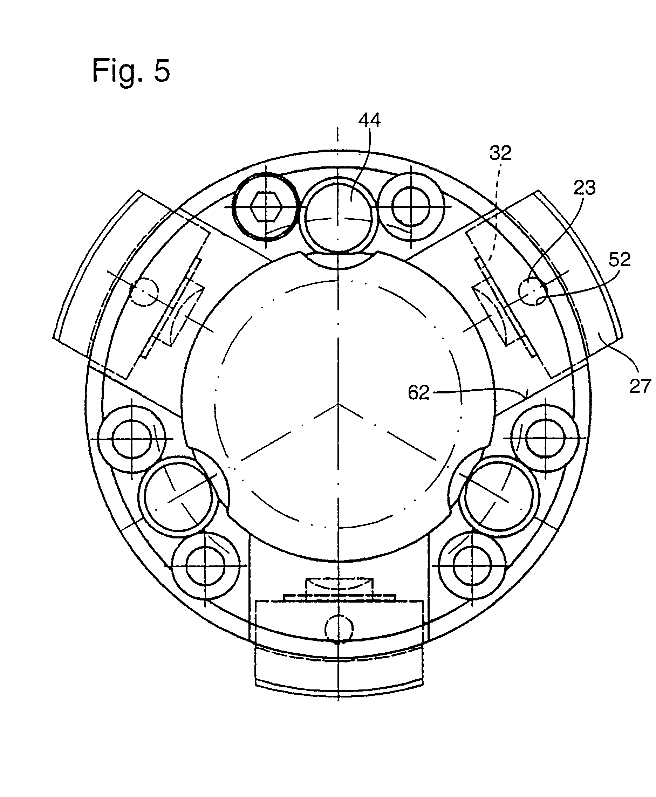

Auf den Endeffektor 14 ist enstsprechend der Halthülse 37 eine Haltehülse 59 aufgesteckt, die jedoch im Gegensatz zur Hülse 37 im Stirnseitenbereich des Endeffektors 14 - abgesehen von einer mit der Axialbohrung 44 fluchtenden axialen Durchgangsbohrung 60 zur Aufnahme einer Sensoroptik 61 - eine radiale Ausnehmung 62, in der der Verriegelungskörper 27 von der Blattfeder 32 beaufschlagt geführt ist (Fig. 5). Die Haltehülse 59 bildet über ihre Funktion als Halterung für den Verzahnungsring 51 hinaus einen Kollisionsschutz für den Verriegelungskörper 27 beim Einführen in den Andockaufsatz 12. Aufgrund ihrer weitgehend geschlossenen Geometrie und der daraus resultierenden gleichmäßigen Massenverteilung stabilisiert die Haltehülse 59 den stirnseitigen Bereich des Endeffektors 14 für die Einführung in den Andockaufsatz 12. Ihre einfache Demontage ermöglicht einen guten Zugang zur Sensoroptik 61 und deren Justage.

Fig. 4 zeigt dem Verriegelungskörper 27 strichliert in der Eintauchstellung und in durchgezogenen Linien in ausgerückter Stellung, in der er die Verzahnung 17 des Andockaufsatzes 12 untergreift. Der Endeffektor 14 weist im übrigen oberhalb des Verzahnungsringes 51 an seinem Außenumfang eine umlaufende Fase 63 auf, mit der sich der Endeffektor 14 an der Flanke 18 des Andockaufsatzes 12 in Andocklage abstützt, so daß dessen Stirnseite 15 nicht zur Anlage an der Oberseite 16 des Ringkörpers 4 kommt. Unmittelbar oberhalb dieser Fase 63 weist der Endeffektor 14 ein Dichtungsring 64 auf, der in Andocklage am Andockaufsatz 12 anliegt und den Endeffektor 14 gegenüber dem Andockaufsatz 12 abdichtet, wodurch die Effizienz der Gasabsaugung in der Schnittstelle Endeffektor 14 - Andockaufsatz 12 gesteigert wird.

Der An- und Abdockvorgang und das Notabdocken verlaufen in gleicher Weise wie beim ersten Ausführungsbeispiel beschrieben.

## Patentansprüche

1. Betankungsanordnung zum roboterfähigen Betanken eines Fahrzeuges mit Kraftstoff, mit einer Zapfpistole (13) und einem Tankeinfüllstutzen (1), an dem einfüllseitig ein mit einem zentralen Durchlaß versehener Andockaufsatz (12) angebracht ist, der mit einem oberen Abschnitt um die Symmetrieachse für den Öffnungs- und Schließvorgang eines Tankverschlußes (2) verdrehbar ist und in dem die Zapfpistole mit ihrem austrittseitigen Ende (14) unter Bildung einer formschlüssigen Verbindung von Zapfpistole und Andockaufsatz andockbar ist, wobei an deren Umfang verteilt angeordnete Formschlußelemente nach Art von Zähnen eines Nabenprofiles im betankungsbereiten Zustand der Zapfpistole formschlüssig ineinandergreifen,
**dadurch gekennzeichnet,**
daß an der Zapfpistole (13) radialbewegliche, aber axial und in Umfangsrichtung feststehende Verriegelungskörper (27) angebracht sind, die in einer radial nach außen geschobenen Position formschlüssig einen umlaufenden Bund am Andockaufsatz (12) - die Zapfpistole (13) axial sichernd - untergreifen und die beim Anund Abdocken der Zapfpistole (13) in eine radial zurückgezogene Position verfahrbar sind.

2. Betankungsanordnung nach Anspruch 1,
**dadurch gekennzeichnet,**
daß eine Radialbewegung der Verriegelungskörper (27) über eine am austrittseitigen Ende (14) der zapfpistole (13) ausgebildete spiralig verlaufende Führungsbahn (24) von einer Drehbewegungung der Zapfpistole (13) ableitbar ist, indem die Führungsbahn sich jeweils an einen radial und in Umfangsrichtung feststehenden Führungsstift (23) abstützen.

3. Betankungsanordnung nach Anspruch 1,
**dadurch gekennzeichnet,**
daß der Verriegelungskörper (27) von einer Vorspannfeder (32) radial nach außen beaufschlagt ist.

4. Betankungsanordnung nach Anspruch 2,
**dadurch gekennzeichnet,**
daß der Verriegelungskörper (27) relativ zu einem axial benachbarten Formschlußelement (21,51) der Zapfpistole (13) entlang der in Umfangsrichtung verlaufenden Führungsbahn (24) führbar ist.

5. Betankungsanordnung nach Anspruch 2,
**dadurch gekennzeichnet,**
daß bei Anlage des Führungsstiftes (23) an einem Ende (29) der Führungsbahn (24) der Verriegelungskörper (27) in der Zapfpistole (13) gänzlich eingetaucht ist und am anderen Ende (28) radial aus der Zapfpistole (13) ragend ausgestellt ist, derart, daß er den Bund des Andockaufsatzes (12) untergreift.

6. Betankungsanordnung nach Anspruch 5,
**dadurch gekennzeichnet,**
daß der umlaufende Bund von dem Gegenformschlußelement (17) des Andockaufsatzes (12) gebildet ist.

7. Betankungsanordnung nach Anspruch 1,
**dadurch gekennzeichnet,**
daß der Verriegelungskörper (27) in ausgestellter Lage mit einer Anschrägung (43) positiver Steigung an einer Anschrägung (19) des untergriffenen Bundes anliegt.

8. Betankungsanordnung nach Anspruch 3,
**dadurch gekennzeichnet,**
daß die Vorspannfeder als parallel zur Durchführung der Zapfpistole (13) ausgerichtete Blattfeder (32) ausgebildet ist, die mit ihrem oberen Ende (35) am austrittseitigen Ende (14) der zapfpistole befestigt ist.

9. Betankungsanordnung nach Anspruch 2,
**dadurch gekennzeichnet,**
daß der Verriegelungskörper (27) hammerkopfförmig ausgebildet und an seinem Außenrand (26) mit dem am austrittseitigen Ende (14) der Zapfpistole (13) angebrachten Formschlußelement (21,51) über einen vertikalen Führungsstift (23) verbunden ist, der in die Führungsbahn (24) eingreift.

10. Betankungsanordnung nach Anspruch 4,
**dadurch gekennzeichnet,**
daß das Formschlußelement (21,51) der Zapfpistole (13) relativ zu dieser verdrehbar ist.

11. Betankungsanordnung nach Anspruch 1,
**dadurch gekennzeichnet,**
daß das Formschlußelement des Andockaufsatzes (12) von einer in dessen Innenumfang angeordneten umlaufenden Verzahnung (17) gebildet ist und daß das Formschlußelement der Zapfpistole (13) von einem Verzahnungsring (21,51) gebildet ist, der für den Formschluß Zahnsegmente (22) aufweist.

12. Betankungsanordnung nach Anspruch 2,
**dadurch gekennzeichnet,**
daß die Führungsbahn (24) in den Verriegelungskörper (27) oberseitig eingearbeitet ist, in die der am Formschlußelement (21,51) der Zapfpistole (13) angebrachte Führungsstift (23) eingreift.

13. Betankungsanordnung nach Anspruch 2,
**dadurch gekennzeichnet,**
daß die Führungsbahn (24) in das Formschlußelement (21,51) der Zapfpistole (13) radial von innen aus eingearbeitet ist, in welche Führungsbahn (24) der am Verriegelungskörper (27) befestigte Führungsstift (23) eingreift.

14. Betankungsanordnung nach Anspruch 2,
**dadurch gekennzeichnet,**
daß für den Führungsstift (23) in der Führungsbahn (24) endseitig jeweils eine Raststellung (28,29) vorgesehen ist, von denen die Raststellung (29) radial weiter innen gelegen ist als die Raststellung (28).

15. Betankungsanordnung nach Anspruch 1,
**dadurch gekennzeichnet**,
daß am austrittseitigen Ende (14) der Zapfpistole (13) eine auf ihn aufgesteckte Haltehülse (37,59) befestigt ist, mit der das auf das Ende (14) aufgestecke zapfpistolenseitige Formschlußelement (21,51) axial gehalten ist.

16. Betankungsanordnung nach Anspruch 15,
**dadurch gekennzeichnet,**
daß die Haltehülse (59) eine radiale Ausnehmung (62) im Stirnseitenbereich des Endeffektors (14) aufweist, in der der Verriegelungskörper (27) radial geführt ist.

17. Betankungsanordnung nach Anspruch 1,
**dadurch gekennzeichnet,**
daß am Andockaufsatz (12) ein in dessen Umfang integrierter um 90° in eine Vertikalstellung schwenkbarer Bügel (45) zum manuellen Öffnen und Schließen des Verschlußdeckels (2) angeordnet ist.

18. Betankungsanordnung nach Anspruch 1,
**dadurch gekennzeichnet,**
daß der Andockaufsatz (12) von einem schräg nach außen verlaufenden Drainagekanal (20) bodenseitig durchsetzt ist.

19. Betankungsanordnung nach Anspruch 1,
**dadurch gekennzeichnet,**
daß der Endeffektor (14) in Umfangsrichtung symmetrisch verteilt angeordnete Axialbohrungen (44) für die Aufnahme einer Sensoroptik (61) aufweist.

## Claims

1. Tank filling arrangement for filling the fuel tank of a vehicle with fuel by means of a robot, with a spigot pistol (13) and a tank filling tube (1) to which, on the filling side, is attached a docking fixture (12) provided with a central passage, an upper section of which can be rotated about the symmetry axis for the opening and closing processes of a tank closure element (2) and into which the spigot pistol can be docked with its outlet working end (14) to form a positive connection between the spigot pistol and the docking fixture, such that form-locking elements resembling the teeth of a hub profile distributed around their circumference engage in one another in a form-enclosing way when the spigot pistol is ready to begin filling the tank,
**characterised in that**
to the spigot pistol (13) are attached radially movable but axially and circumferentially fixed locking elements (27), which, in their radially outwardsextended position engage positively beneath a surrounding collar on the docking fixture (12) - so securing the spigot pistol (13) axially - and which, when the spigot pistol (13) is being docked or released, can move to a radially retracted position.

2. Tank filling arrangement according to Claim 1,
**characterised in that**
a radial movement of the locking element (27) can be produced via a guide track (24) that extends in a spiral at the outlet working end (14) of the spigot pistol (13) by a rotary movement of the spigot pistol (13), in that the guide track is in contact respectively with a radially and circumferentially fixed guide pin (23).

3. Tank filling arrangement according to Claim 1,
**characterised in that**
the locking element (27) is acted upon by a pre-stressing spring (32) which pushes it radially outwards.

4. Tank filling arrangement according to Claim 2,
**characterised in that**
the locking element (27) can be guided along the circumferentially extending guide track (24) relative to an axially adjacent form-locking element (21, 51) of the spigot pistol (13).

5. Tank filling arrangement according to Claim 2,
**characterised in that**
when the guide pin (23) is in contact with one end (29) of the guide track (24) the locking element (27) is retracted entirely into the spigot pistol (13), while at the other end (28) it projects radially out of the spigot pistol (13), such that it engages under the collar of the docking fixture (12).

6. Tank filling arrangement according to Claim 5,
**characterised in that**
the surrounding collar is formed by the complementary form-locking element (17) of the docking fixture (12).

7. Tank filling arrangement according to Claim 1,
**characterised in that**
in its extended position the locking element (27) rests on an inclined surface (43) of positive slope against an inclined surface (19) of the collar with which it engages.

8. Tank filling arrangement according to Claim 3,
**characterised in that**
the pre-stressing spring is formed as a leaf spring (32) directed parallel to the passage through the spigot pistol (13), whose upper end (35) is attached to the outlet working end (14) of the spigot pistol.

9. Tank filling arrangement according to Claim 2,
**characterised in that**
the locking element (27) is formed in the shape of a hammer-head and is connected at its outer edge (26) with the form-locking element (21, 51) at the outlet working end (14) of the spigot pistol (13) via a vertical guide pin (23) which engages in the guide track (24).

10. Tank filling arrangement according to Claim 4,
**characterised in that**
the form-locking element (21, 51) of the spigot pistol (13) can be rotated relative to it.

11. Tank filling arrangement according to Claim 1,
**characterised in that**
the form-locking element of the docking fixture (12) is formed by a tooth array (17) running around its inner circumference, and the form-locking element of the spigot pistol (13) is formed by a toothed ring (21, 51) comprising toothed segments (22) for the form-locking function.

12. Tank filling element according to Claim 2,
**characterised in that**
the guide track (24) in which the guide pin (23) attached to the form-locking element (21, 51) of the spigot pistol (13) engages, is formed in the upper side of the locking element (27).

13. Tank filling arrangement according to Claim 2,
**characterised in that**
the guide track (24) in which the guide pin (23) attached to the locking element (27) engages, is formed in the form-locking element (21, 51) of the spigot pistol (13) radially from the inside outwards.

14. Tank filling arrangement according to Claim 2,
**characterised in that**
for the guide pin (23) in the guide track (24) respective lodgement position (28, 29) are provided, of which the lodgement position (29) is radially further inside than the position (28).

15. Tank filling arrangement according to Claim 1,
**characterised in that**
to the outlet working end (14) of the spigot pistol (13) is attached a holding collar (37, 59) pushed over it, by which the form-locking element (21, 51) pushed onto the end (14) on the spigot pistol side is held axially.

16. Tank filling arrangement according to Claim 15,
**characterised in that**
the holding collar (59) has a radial recess (62) at the front side area of the working end (14), into which the locking element (27) is radially guided.

17. Tank filling arrangement according to Claim 1,
**characterised in that**
on the docking fixture (12), integrated in its circumference, is arranged a handle (45) that can be swivelled through 90° into a vertical position, for the manual opening and closing of the closure cover (2).

18. Tank filling arrangement according to Claim 1,
**characterised in that**
through the bottom of the docking fixture (12) passes a drainage channel (20) which extends obliquely outwards.

19. Tank filling arrangement according to Claim 1,
**characterised in that**
the working end (14) has axial holes (44) distributed symmetrically in its circumferential direction to receive an optical sensor element (61).

## Revendications

1. Dispositif de ravitaillement pour le ravitaillement automatisé en carburant d'un véhicule, avec un pistolet distributeur (13) et une tubulure de remplissage de réservoir (1), sur laquelle est montée, du côté remplissage, une garniture d'accostage (12) dotée d'un passage central, susceptible d'être tournée, par un tronçon supérieur, autour de l'axe de symétrie pour assurer le processus d'ouverture et de fermeture d'une fermeture de réservoir (2) et dans laquelle le pistolet distributeur peut être accosté, par son extrémité (14) située côté sortie, en constituant une liaison à liaison à ajustement de forme entre le pistolet distributeur et la garniture d'accostage, des éléments de liaison à ajustement de forme, répartis sur sa périphérie, s'engageant les uns dans les autres, en établissant une liaison à ajustement de forme, à la façon de dents d'un profil de moyeu, lorsque le pistolet distributeur est à l'état prêt au ravitaillement,
caractérisé en ce que
sur le pistolet distributeur (13) sont montés des corps de verrouillage (27), mobiles radialement mais stationnaires axialement et en direction périphérique, qui saisissent par le dessous, en une position passée radialement vers l'extérieur, avec établissement d'une liaison de forme - en bloquant axialement le pistolet distributeur (13) - une collerette de pourtour se trouvant sur la garniture d'accostage (12), et qui sont déplaçables en une position radialement rétractée, lors de l'accostage et du dégagement du pistolet distributeur (13).

2. Dispositif de ravitaillement selon la revendication 1, caractérisé en ce qu'un déplacement radial des corps de verrouillage (27) peut être dérivé d'un mouvement de rotation du pistolet distributeur (13), par l'intermédiaire d'une piste de guidage (24) s'étendant en spirale, réalisée à l'extrémité (14), située côté sortie, du pistolet distributeur (13), en ce que des tiges de guidage (23), fixes radialement et en direction périphérique, prennent appui respectivement sur la piste de guidage.

3. Dispositif de ravitaillement selon la revendication 1, caractérisé en ce que le corps de verrouillage (27) est susceptible d'être sollicité radialement vers l'extérieur par un ressort de précontrainte (32).

4. Dispositif de ravitaillement selon la revendication 2, caractérisé en ce que le corps de verrouillage (27) est susceptible d'être guidé par rapport à un élément de liaison à ajustement de forme (21, 51) voisin axialement du pistolet distributeur (13), le long de la piste de guidage (24) s'étendant en direction périphérique.

5. Dispositif de ravitaillement selon la revendication 2, caractérisé en ce que, en cas d'appui de la tige de guidage (23) sur une extrémité (29) de la piste de guidage (24), le corps de verrouillage (27) est complètement enfoncé dans le pistolet de distributeur (13) et qu'il sort à l'autre extrémité (28) radialement du pistolet distributeur (13), de manière qu'il saisisse par le dessous la collerette de la garniture d'accostage (12).

6. Dispositif de ravitaillement selon la revendication 5, caractérisé en ce que la collerette de pourtour est constituée par l'élément de liaison à ajustement de forme conjugué (17) de la garniture d'accostage (12).

7. Dispositif de ravitaillement selon la revendication 1, caractérisé en ce que le corps de verrouillage (27), lorsqu'on est en position installée, vient en appui, par un chanfrein (43) de pente positive, sur un chanfrein (19) de la collerette saisie par le dessous.

8. Dispositif de ravitaillement selon la revendication 3, caractérisé en ce que le ressort de précontrainte est réalisé sous la forme d'un ressort à lame (32) orienté parallèlement au passage du pistolet distributeur (13), ressort fixé, par son extrémité supérieure (35), sur l'extrémité (14) située côté sortie du pistolet distributeur.

9. Dispositif de ravitaillement selon la revendication 2, caractérisé en ce que le corps de verrouillage (27) est réalisé en forme de tête de marteau et est relié, sur sa bordure extérieure (26), par une tige de guidage (23) verticale s'engageant dans la piste de guidage (24), à l'élément de liaison à ajustement de forme (21, 51), monté sur l'extrémité (14), située côté sortie, du pistolet distributeur (13).

10. Dispositif de ravitaillement selon la revendication 4, caractérisé en ce que l'élément de liaison à ajustement de forme (21, 51) du pistolet distributeur (13) est susceptible de tourner par rapport à celui-ci.

11. Dispositif de ravitaillement selon la revendication 1, caractérisé en ce que l'élément de liaison à ajustement de forme de la garniture d'accostage (12) est constitué par une denture (17) faisant le pourtour, disposée dans sa périphérie intérieure, et en ce que l'élément de liaison à ajustement de forme du pistolet distributeur (13) est constitué par une bague à denture (21, 51) présentant des segments dentés (22) destinés à établir la liaison à ajustement de forme.

12. Dispositif de ravitaillement selon la revendication 2, caractérisé en ce que la piste de guidage (24), dans laquelle s'engage la tige de guidage (23), montée sur l'élément de liaison à ajustement de forme (21, 51), du pistolet distributeur (13), est usinée, du côté supérieur, dans le corps de verrouillage (27).

13. Dispositif de ravitaillement selon la revendication 2, caractérisé en ce que la piste de guidage (24) , dans laquelle s'engage la tige de guidage (23) fixée sur le corps de verrouillage (27), est usinée, radialement depuis l'intérieur, dans l'élément de liaison à ajustement de forme (21, 51) du pistolet distributeur (13).

14. Dispositif de ravitaillement selon la revendication 2, caractérisé en ce que des positions d'encliquetage (28, 29), parmi lesquelles la position d'encliquetage (29) est située radialement plus à l'intérieur que la position d'encliquetage (28), sont respectivement prévues pour la tige de guidage (23), dans la piste de guidage (24), du côté extrémité.

15. Dispositif de ravitaillement selon la revendication 1, caractérisé en ce que, à l'extrémité (14), située côté sortie, du pistolet distributeur (13), est fixée une douille de maintien (37, 59) enfichée sur cette extrémité, douille à l'aide de laquelle l'élément de liaison à ajustement de forme (21, 51) situé du côté du pistolet distributeur, enfilé sur l'extrémité (14), est maintenu axialement.

16. Dispositif de ravitaillement selon la revendication 15, caractérisé en ce que la douille de maintien (59) présente, dans la zone de côté frontal de l'actionneur d'extrémité (14), un évidement radial (62) dans lequel le corps de verrouillage (27) est guidé radialement.

17. Dispositif de ravitaillement selon la revendication 1, caractérisé en ce que, sur la garniture d'accostage (12), est disposé un étrier (45) intégré dans sa périphérie, susceptible de pivoter de 90° pour passer en une position verticale, étrier destiné à l'ouverture et la fermeture manuelles du couvercle de fermeture (2).

18. Dispositif de ravitaillement selon la revendication 1, caractérisé en ce que la garniture d'accostage (12) est traversée, côté fond, par un canal de drainage (20) s'étendant obliquement vers l'extérieur.

19. Dispositif de ravitaillement selon la revendication 1, caractérisé en ce que l'actionneur d'extrémité (14) présente des perçages axiaux (44) répartis symétriquement dans la direction périphérique, afin de loger une optique de capteur (61).
